Europäisches Patentamt

(19) **European Patent Office**

Office européen des brevets

(11) Veröffentlichungsnummer: **0 048 495**
**B1**

(12) **EUROPÄISCHE PATENTSCHRIFT**

(45) Veröffentlichungstag der Patentschrift:
06.03.85

(51) Int. Cl.⁴: **B 65 G 65/44**

(21) Anmeldenummer: 81107567.0

(22) Anmeldetag: 23.09.81

(54) Verfahren und Vorrichtung zum Abziehen eines Bunkers mit Austragschlitz.

(30) Priorität: 24.09.80 DE 3035930

(43) Veröffentlichungstag der Anmeldung:
31.03.82 Patentblatt 82/13

(45) Bekanntmachung des Hinweises auf die Patenterteilung:
06.03.85 Patentblatt 85/10

(84) Benannte Vertragsstaaten:
AT BE CH DE FR GB IT LI LU NL SE

(56) Entgegenhaltungen:
DE - B - 1 068 631

SOVIET INVENTIONS ILLUSTRATED, Sektion PQ,
Woche C 26, 6. August 1980 DERWENT PUBLICATIONS
LTD., London, Seite Q 35

(73) Patentinhaber: Klöckner-Humboldt-Deutz
Aktiengesellschaft,
Deutz-Mülheimer-Strasse 111 Postfach 80 05 09,
D-5000 Köln 80 (DE)

(72) Erfinder: Zimmermann, Othmar, Hermeskamp 5,
D-4630 Bochum (DE)

(74) Vertreter: Beisner, Klaus, Dipl.-Ing. et al, c/o KHD
Humboldt Wedag AG Patente und Lizenzen
Wiersbergstrasse Postfach 91 04 04, D-5000 Köln 91 (DE)

**Beschreibung**

Die Erfindung betrifft ein Verfahren zum Abziehen eines Gutes aus einem Bunker, wobei der Bunker eine erste Öffnung und eine zweite seitliche Öffnung zum Austrag des Gutes aufweist und wobei das Bunkergut durch eine schwingende Bewegung ausgetragen wird.

Bei Bunkern mit Austragsschlitzen, insbesondere bei großen Bunkern für Erz, Schlacke, Kohle etc. ist es üblich, im Austragsschlitz einen Plattenband-Förderer oder einen Kratzer-Förderer anzuordnen, der das Gut in dem Austragsschlitz, der von erheblicher Länge sein kann, zur Austrags-Öffnung hin fördert und aus dieser austrägt. Durch das große Gewicht des Bunkerinhaltes bedingt, sind bei diesen bekannten Austrags-Vorrichtungen starke Antriebsmotore notwendig, des weiteren sind die beweglichen Teile der Förderer einem erheblichen Verschleiß ausgesetzt.

Aus »Derwent-Publications« Ltd., London, Seite Q35, Woche C26, 6. August 1980 ist eine gattungsgleiche Vorrichtung zum Abziehen eines Gutes aus einem Bunker bekannt, wobei der Bunker eine erste Öffnung und eine zweite, seitliche Öffnung zum Austrag des Gutes an einer Seite der ersten Öffnung aufweist, und wobei unter der ersten Öffnung eine Schwingförder-Vorrichtung angeordnet ist. Bei dieser Vorrichtung wird mit großem Energieaufwand immer der gesamte Bunkerinhalt bewegt und im unteren Bereich verdichtet, wobei auch eine Kornzerkleinerung auftritt.

Durch die DE-B 1 068 631 ist ein Verfahren zum Abzug eines Gutes aus einem Bunker mit Austragsschlitz bekannt, wobei zum Austrag des Bunkergutes eine Schwingfördervorrichtung verwendet wird, die allerdings nachteilig ebenfalls den gesamten Bunkerinhalt bewegt.

Es ist Aufgabe der Erfindung, ein Verfahren und eine Vorrichtung zum Austragen von Bunkergut aus dem Austragsschlitz eines Schlitz-Bunkers anzugeben, bei denen die Antriebsmotore verkleinert, der Verschleiß verringert und die Gesamtkosten gesenkt werden können.

Die Aufgabe wird dadurch gelöst, daß die schwingende Bewegung gesteuert nur in Teilen der als Austragsschlitz ausgebildeten ersten Öffnung wirkt, wo sie zum Austrag des Gutes und zur Entleerung des Bunkers erforderlich ist. Durch eine schwingende Bewegung des Bunkergutes im Austragsschlitz wird vorteilhaft erreicht, daß das Material in sich gelockert wird und sich daher mit erheblich verringertem Kraftaufwand bewegen läßt. Dabei kann vorteilhaft auf ein umlaufendes, schweres und verschleißanfälliges Förderorgan verzichtet werden. Ferner wird hierdurch vorteilhaft erreicht, daß nur der Teil des Bunkerinhaltes schwingend bewegt wird, der auch abgefördert werden kann. Der Teil des Bunkerinhaltes, bei dem es lediglich zu einer Bewegung auf der Stelle kommen würde, bleibt im Stillstand; so kann vorteilhaft der Kraftbedarf des Förderers weiter gesenkt und ein Verklemmen des Bunkergutes im Unterteil des Bunkers verhindert werden. Es wird weiterhin verhindert, daß sich der nicht abgeförderte Teil des Bunkergutes entmischt. Auch der Verschleiß der Förder-Vorrichtung wird vorteilhaft weiter herabgesetzt.

In weiterer Ausgestaltung der Erfindung ist vorgesehen, daß die schwingende Bewegung bei gefülltem Bunker nur im Bereich der zweiten Öffnung wirkt und daß der Bereich der schwingenden Bewegung mit fortschreitender Entleerung verlängert wird. So wird vorteilhaft der Tatsache Rechnung getragen, daß bei gefülltem Bunker Gut nur aus der Gutmenge vor der zweiten Öffnung abgefördert werden kann. Der restliche Teil des Bunkergutes bleibt so lange in Ruhe, bis er durch die Verlängerung der schwingenden Bewegung auch ausgetragen werden kann.

In weiterer Ausgestaltung der Erfindung ist vorgesehen, daß die schwingende Bewegung des Bunkergutes durch eine Schwingungs-Erzeugung unter dem Austragsschlitz erreicht wird. So läßt sich das erfindungsgemäße Verfahren besonders einfach durchführen. Eine Schwingungs-Erzeugung im Bereich der Schlitzwände wäre weitaus aufwendiger und würde eine zu tief in das Bunkergut hineinreichende Schwingungs-Bewegung zur Folge haben.

Zur Durchführung des Verfahrens ist vorgesehen, daß die erste Öffnung als Austragsschlitz ausgebildet ist, an deren Schmalseite sich die zweite Öffnung zum Austrag des Gutes befindet und wobei die unter dem Austragsschlitz angeordnete Schwingförder-Vorrichtung mehrteilig ausgebildet ist.

Durch die mehrteilige Ausbildung ist es möglich, die erfindungsgemäße Arbeitsweise besonders einfach zu realisieren. Gleichzeitig sind kleine, kostengünstig in Serie gebaute Einzel-Vorrichtungen einsetzbar, die an Ort und Stelle miteinander verbunden werden.

In weiterer Ausgestaltung der Erfindung ist vorgesehen, daß jeder Teil der Schwingförder-Vorrichtung einen eigenen, vorzugsweise regelbaren Antrieb aufweist. Durch die Verwendung von Einzelantrieben ist die erfindungsgemäße Steuerung einfach durchführbar. Des weiteren kann eine Abstufung der Förder-Geschwindigkeiten der einzelnen Teile in der Art erfolgen daß die Fördergeschwindigkeit vorteilhaft in Bewegungs-Richtung zunimmt.

In weiterer Ausgestaltung der Erfindung ist vorgesehen, daß die Schwingförder-Vorrichtung aus einzelnen, beweglich miteinander verbundenen oder sich überlappenden Schwingförderrinnen besteht. Auf diese Art und Weise ergibt sich eine besonders kostengünstige Ausführung, da geeignete Schwingförderrinnen bereits in Serie hergestellt werden. Dabei sorgt die Rinnen-Form für einen besonders guten Bunkerverschluß.

In weiterer Ausgestaltung der Erfindung ist vorgesehen, daß die Schwingförderrinnen als Erreger einen elektrischen Unwuchtmotor aufweisen. Der Antrieb der Schwingförderrinnen durch elektrische Unwuchtmotore ist besonders vorteilhaft, da diese geräuscharm laufen und in ihrem Energieverbrauch elektromagnetischen Schwingern überlegen sind. Trotzdem wirken sie — wie die elektromagnetischen Schwinger — ebenfalls einfach direkt auf die Schwingförderrinnen ein.

In weiterer Ausgestaltung der Erfindung ist vorgesehen, daß der Bunker Füllstands-Meßvorrichtungen aufweist. Durch Füllstands-Meßvorrichtungen, insbesondere durch Füllstands-Meßvorrichtungen, die über die Länge des Austragschlitzes verteilt sind, kann vorteilhaft erreicht werden, daß auf der Schwingförder-Vorrichtung stets eine Mindestgutlage zurückgehalten wird, die eine Beschädigung der Schwingförderrinnen bei erneuter Füllung des Bunkers verhindert. Des weiteren kann vorteilhaft erreicht werden, daß das Einschalten der weiteren Schwingförderrinnen bei zunehmender Entleerung des Bunkers automatisch gesteuert erfolgen kann.

In weiterer Ausgestaltung der Erfindung ist vorgesehen, daß die Füllstands-Meßvorrichtungen an den Federn der Schwingförderrinnen angeordnet sind. Auf diese Art und Weise wird besonders vorteilhaft von den elastischen Eigenschaften der Lagerung der Förderrinnen Gebrauch gemacht. Die Messung der Einfederung erfolgt in dem Raum unter den Förderrinnen, der leicht zugänglich ist und in dem eine Beschädigung der Meßgeräte ausgeschlossen werden kann.

Darüber hinaus können die Meßgeräte einfach mit Grenzwertschaltern kombiniert werden, die für die einzelnen Förderrinnen das Verbleiben einer genügend hohen Gutschicht auf ihrer Oberfläche automatisch sicherstellen.

Die Erfindung wird anhand einer Zeichnung näher erläutert, aus der weitere Einzelheiten entnehmbar sind.

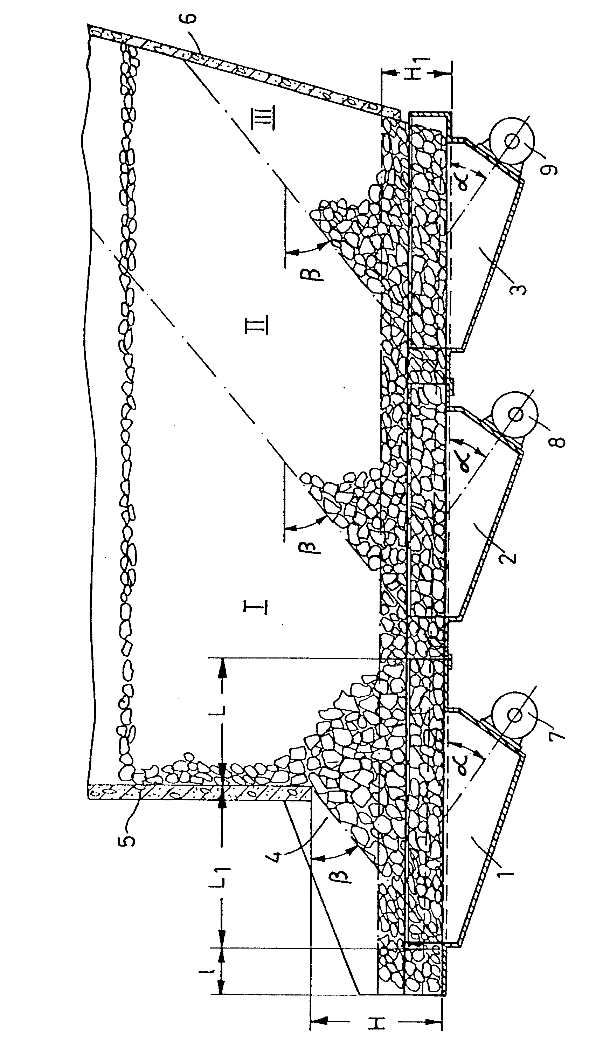

Die Zeichnung zeigt in schematischer Darstellung die verschiedenen Stadien beim Entleeren eines Bunkers durch drei Schwingförderrinnen zur Erzeugung der schwingenden Bewegung des Austragsgutes.

In der Zeichnung bezeichnen 1, 2 und 3 die drei Schwingförderrinnen mit ihren Antriebsmotoren 7, 8 und 9, die einzeln eingeschaltet und in ihrer Förderleistung geregelt werden können. Der Erregungswinkel $\alpha$ ist in diesem Beispiel bei allen drei Förderrinnen 1, 2 und 3 gleich; er kann jedoch auch unterschiedlich gewählt werden. Die Schwingförderrinnen selbst sind vorteilhaft besonders robust mit starken Seitenträgern und in diesen eingehängten Fördertrögen ausgebildet. Auf der Oberseite der Fördertröge ist vorteilhaft eine verschleißmindernde Deckschicht — zum Beispiel aus Gummi — aufgebracht. Von den Bunkern selbst sind nur der Austragsteil mit der Vorderwand 5, in der sich die Austrags-Öffnung 4 befindet und die Rückwand 6 darstellt. Das Gut im Bunker bildet eine Böschung mit dem Böschungswinkel $\beta$, der sich sowohl an der Austrags-Öffnung 4 als auch bei einer Entleerung des Bunkers im Inneren des Bunkers einstellt.

Während die Längen und die Lage der inneren Förderrinnen 2 und 3 relativ beliebig gewählt werden können, müssen bei der Rinne 1, die unter der Austragsöffnung 4 angeordnet ist, H mindestens gleich L sein. Lediglich bei verdichtbaren Schüttgütern ist eine gewisse Unterschreitung dieses Verhältnisses möglich, da sich das Gut in der Austrags-Öffnung 4 komprimiert und so auch eine zu große, von hinten herangeförderte Gutmenge durch die Austragsöffnung hindurch geschoben werden kann. In der Regel wird jedoch L = H bzw. sogar L < H gewählt werden müssen.

Die Länge L1 des Außenteiles der Förderrinne 1 bestimmt sich nach dem Böschungswinkel $\beta$ und ist so bemessen, daß das Gut bei Stillstand der Förderrinne 1 nicht von selbst aus dem Bunker auslaufen kann. Zur Sicherheit ist die Länge L1 noch um die Länge 1 vergrößert, um auch bei unterschiedlichen Böschungswinkeln, die sich zum Beispiel bei Änderungen der Konsistenz des Bunkergutes einstellen, mit Sicherheit ein Auslaufen des Bunkergutes aus der Austragsöffnung 4 zu verhindern.

Die Arbeitsweise des erfindungsgemäßen Verfahrens ist wie folgt:

Der Bunker wird zunächst gefüllt. Zur Entleerung wird nun die Förderrinne 1 in Betrieb genommen und fördert das auf ihr liegende Gut ab, das entsprechend dem Schüttgutwinkel $\beta$ aus dem Bunker-Oberteil nachrutscht. Ist nun der Bunkerbereich I bis auf die Schutzschichthöhe H1 geleert, wird automatisch die Schwingförderrinne 2 eingeschaltet, die unter Abgabe ihres Gutes an die weiterlaufende Schwingförderrinne 1 den Bunker im Bereich II ebenfalls bis auf die Schutzschichthöhe H1 entleert. Anschließend wird automatisch die Förderrinne 3 in Betrieb genommen und entleert den Bunker völlig. Es ist ersichtlich, daß die Förderrinne 3 nur selten zum Einsatz kommt und daß auch die Förderrinne 2 nur einen kleinen Teil der Entleerungszeit in Betrieb ist. Entsprechend gering ist bei diesen Rinnen der Verschleiß, so daß sich durch die erfindungsgemäße Verfahrensweise eine weitere Kostensenkung beim Bunkerabzug ergibt.

Das erfindungsgemäße Verfahren und die erfindungsgemäße Vorrichtung sind insbesondere für große Austragsschlitze und für den Austrag von Mineralien, zum Beispiel Erze, Schlacke, Kohle etc., gedacht. Verfahren und Vorrichtung können jedoch ebenso vorteilhaft auch in der Nahrungsmittel-Industrie etc. angewendet werden, nämlich überall dort, wo Bunker mit Austragsschlitzen installiert sind.

**Patentansprüche**

1. Verfahren zum Abziehen eines Gutes aus einem Bunker, wobei der Bunker eine erste Öffnung und eine zweite, seitliche Öffnung zum Austrag des Gutes an einer Seite der ersten Öffnung aufweist, und wobei das Bunkergut durch eine schwingende Bewegung ausgetragen wird, dadurch gekennzeichnet, daß die schwingende Bewegung gesteuert nur in den Teilen der als Austragsschlitz ausgebildeten ersten Öffnung wirkt, wo sie zum Austrag des Gutes und zur Entleerung des Bunkers erforderlich ist.

2. Verfahren nach Anspruch 1, dadurch gekennzeichnet, daß die schwingende Bewegung bei gefülltem Bunker nur im Bereich der zweiten Öffnung wirkt.

3. Verfahren nach Anspruch 2, dadurch gekennzeichnet, daß der Bereich der schwingenden Bewegung mit fortschreitender Entleerung verlängert wird.

4. Verfahren nach Anspruch 1, 2 oder 3, dadurch gekennzeichnet, daß die schwingende Bewegung des Bunkergutes durch eine Schwingungserzeugung unter dem Austragsschlitz erreicht wird.

5. Vorrichtung zum Abziehen eines Gutes aus einem Bunker, wobei der Bunker eine erste Öffnung und eine zweite, seitliche Öffnung (4) zum Austrag des Gutes an einer Seite der ersten Öffnung aufweist, und wobei unter der ersten Öffnung eine Schwingförder-Vorrichtung (1, 2, 3) angeordnet ist, dadurch gekennzeichnet, daß die erste Öffnung als Austragsschlitz ausgebildet ist, an deren Schmalseite sich die zweite Öffnung (4) befindet und wobei die unter dem Austragsschlitz angeordnete Schwingförder-Vorrichtung (1, 2, 3) mehrteilig ausgebildet ist.

6. Vorrichtung nach Anspruch 5, dadurch gekennzeichnet, daß jeder Teil (1, 2, 3) der Schwingförder-Vorrichtung einen eigenen, vorzugsweise regelbaren Antrieb (7, 8, 9) aufweist.

7. Vorrichtung nach Anspruch 5 oder 6, dadurch gekennzeichnet, daß die Schwingförder-Vorrichtung (1, 2, 3) aus einzelnen, beweglich miteinander verbundenen oder sich überlappenden Schwingförderrinnen besteht.

8. Vorrichtung nach Anspruch 7, dadurch gekennzeichnet, daß die Schwingförderrinnen als Erreger einen elektrischen Unwuchtmotor aufweisen.

9. Vorrichtung nach einem der Ansprüche 5 bis 8, dadurch gekennzeichnet, daß der Bunker Füllstands-Meßvorrichtungen aufweist.

10. Vorrichtung nach Anspruch 9, dadurch gekennzeichnet, daß die Füllstands-Meßvorrichtungen an den Federn der Schwingförderrinnen angeordnet sind.

## Claims

1. A method of extracting a material from a bunker, wherein the bunker comprises a first aperture and a second, lateral aperture for the discharge of the material at one side of the first aperture, and wherein the bunker material is discharged by a vibrating movement, characterised in that the vibrating movement acts, in a controlled manner, only in the parts of the first aperture, constructed in the form of a discharge slot, where it is necessary to discharge the material and to empty the bunker.

2. A method as claimed in Claim 1, characterised in that, when the bunker is filled, the vibrating movement only acts in the region of the second aperture.

3. A method as claimed in Claim 2, characterised in that the range of the vibrating movement is lengthened as emptying progresses.

4. A method as claimed in Claim 1, 2 or 3, characterised in that the vibrating movement of the bunker material is achieved by producing a vibration below the discharge slot.

5. An apparatus for extracting a material from a bunker, wherein the bunker comprises a first aperture and a second, lateral aperture (4) for the discharge of the material, at one side of the first aperture and wherein a vibrating conveyor device (1, 2, 3) is disposed below the first aperture, characterised in that the first aperture is constructed in the form of a discharge slot at the narrow side of which there is the second aperture (4) and wherein the vibrating conveyor device (1, 2, 3) disposed below the discharge slot is of multiple-part construction.

6. An apparatus as claimed in Claim 5, characterised in that each part (1, 2, 3) of the vibrating conveyer device has its own drive (7, 8, 9) which is preferably adjustable.

7. An apparatus as claimed in Claim 5 or 6, characterised in that the vibrating conveyor device (1, 2, 3) consists of individual vibrating trough conveyors which are moveably connected to one another or overlap.

8. An apparatus as claimed in Claim 7, characterised in that the vibrating trough conveyors comprise an electric out-of-balance motor as exciting means.

9. An apparatus as claimed in one of the Claims 5 to 8, characterised in that the bunker comprises fullness measuring instruments.

10. An apparatus as claimed in Claim 9, characterised in that the fullness measuring instruments are disposed on the springs of the vibrating trough conveyors.

## Revendications

1. Procédé pour extraire une matière d'une soute, cette soute comportant une première ouverture et une seconde ouverture latérales pour le déchargement de la matière sur un côté de la première ouverture et la matière de la soute étant déchargée par un mouvement oscillant, caractérisé en ce que le mouvement oscillant agit en étant commandé seulement dans les parties de la première ouverture agencée comme une fente de déchargement, où cela est nécessaire pour le déchargement de la matière et pour le vidage de la soute.

2. Procédé selon la revendication 1, caractérisé en ce que le mouvement oscillant agit, dans le cas d'une soute remplie, seulement dans la zone de la seconde ouverture.

3. Procédé selon la revendication 2, caractérisé en ce que la zone du mouvement oscillant est allongée à mesure que progresse le vidage.

4. Procédé selon la revendication 1, 2 ou 3, caractérisé en ce que le mouvement oscillant de la matière de soute est obtenu par génération d'oscillation en dessous de la fente de déchargement.

5. Dispositif pour extraire une matière d'une soute, cette soute comportant une première ouverture et une seconde ouverture latérales (4) pour le déchargement de la matière sur un côté de la première ouverture et un dispositif transporteur oscillant (1, 2, 3) étant disposé en dessous de la première ouverture, caractérisé en ce que la première ouverture est agencée comme une fente de déchargement sur le côté étroit de laquelle se trouve la seconde ouverture (4) et le dispositif transporteur oscillant (1, 2, 3) disposé en dessous de la fente de déchargement est réalisé en plusieurs parties.

6. Dispositif selon la revendication 5, caractérisé en ce que chaque partie (1, 2, 3) du dispositif transporteur oscillant comporte un entraînement propre, de préférence réglable (7, 8, 9).

7. Dispositif selon la revendication 5 ou 6, caractérisé en ce que le dispositif transporteur oscillant (1, 2, 3) se compose de différentes goulottes transporteuses oscillantes, reliées entre elles de façon mobile ou bien se recouvrant.

8. Dispositif selon la revendication 7, caractérisé en ce que les goulottes transporteuses oscillantes comportent comme dispositif d'excitation un moteur électrique à balourd.

9. Dispositif selon l'une des revendications 5 à 8, caractérisé en ce que la soute comporte des dispositifs de mesure de niveau de remplissage.

10. Dispositif selon la revendication 9; caractérisé en ce que les dispositifs de mesure de niveau de remplissage sont disposés sur les ressorts des goulottes transporteuses oscillantes.